(19) **Europäisches Patentamt**

**European Patent Office**

**Office européen des brevets**

(11) **EP 1 267 122 B1**

(12) **EUROPEAN PATENT SPECIFICATION**

(45) Date of publication and mention
of the grant of the patent:
**18.02.2004  Bulletin 2004/08**

(51) Int Cl.⁷: **F23G 5/50**

(21) Application number: **02078911.1**

(22) Date of filing: **02.10.1997**

(54) **Combustion control method in refuse incineration furnace**

Verfahren zur Verbrennungsregelung eines Abfallverbrennungsofens

Procédé de régulation de la combustion d'un incinérateur de déchets

(84) Designated Contracting States:
**BE DE DK FR GB**

(43) Date of publication of application:
**18.12.2002  Bulletin 2002/51**

(62) Document number(s) of the earlier application(s) in
accordance with Art. 76 EPC:
**97942223.5 / 0 943 864**

(73) Proprietor: **NKK CORPORATION**
**Tokyo 100 (JP)**

(72) Inventors:
• **Fujii, Satoshi, c/o NKK Corporation**
**Tokyo 100 (JP)**
• **Kuroda, Manabu, c/o NKK Corporation**
**Tokyo 100 (JP)**
• **Nogami, Yuichi, c/o NKK Corporation**
**Tokyo 100 (JP)**

(74) Representative:
**Miller, James Lionel Woolverton et al**
**Kilburn & Strode,**
**20 Red Lion Street**
**London WC1R 4PJ (GB)**

(56) References cited:
• **No relevant documents disclosed**

EP 1 267 122 B1

EP 1 267 122 B1

**Description**

TECHNICAL FIELD

The present invention relates to a combustion control method in which the quantity of supplied refuse and the quantity and temperature of combustion air are adjusted in a refuse incineration furnace utilizing combustion heat of refuse for producing steam power so that the state of combustion is stabilized to obtain a predetermined quantity of produced steam.

BACKGROUND OF THE INVENTION

An urban refuse incineration furnace has an important role in the disposal of various kinds of waste matter discarded in social life. In recent years, a refuse incineration furnace including a boiler power generation equipment has been popularized because of an increasing interest in collection of enormous heat energy produced by incineration of refuse as waste matter. Further, the incineration furnace is required to stabilize the combustion of refuse to thereby keep the vaporization of boiler water constant.

After gathered refuse is stirred in a refuse pit to reduce variation in components, properties, etc., the refuse is delivered to a refuse incineration furnace. In the refuse incineration furnace, the refuse is put into a hopper intermittently at intervals of tens of minutes by a crane. In this occasion, the weight of the refuse is measured by a gravimeter and the height of the refuse in the hopper is measured by a level meter. Further, a drying fire grate is disposed under the hopper. The refuse is continuously fed into the furnace by the drying fire grate. The drying fire grate has both a function of feeding the refuse and a function of drying the refuse. The dried refuse is supplied to a combustion fire grate following the drying fire grate.

To keep the quantity of produced steam constant, the quantity of refuse to be burned is required to be controlled to be constant. Generally, the quantity of incineration corresponding to the necessary quantity of produced steam is calculated on the basis of the actual quantity of produced steam, the actual quantity of supplied combustion air/cooling air and the actual quantity of introduced refuse in the past, so that the target quantity of incineration is set whenever refuse is introduced. Further, the refuse feed speed of the drying fire grate is controlled to make the quantity of incineration approach the target incineration quantity by increasing the drying fire grate speed when the actual quantity of supplied refuse is smaller than the target incineration quantity or by reducing the drying fire grate speed when the actual quantity of supplied refuse is larger than the target incineration quantity.

As a method for quantitatively supplying refuse to make the quantity of supplied refuse equal to the target incineration quantity, conventionally, there are, for example, the following prior art techniques.

(1) A technique in which a refuse weight measuring device is provided in the back of a drying fire grate for supplying refuse into a furnace and in which the weight change of refuse is grasped to correct the quantity of supplied refuse to eliminate the difference from a set value to thereby adjust the quantity of supplied refuse, is described in JP-A-63-113215.
(2) A technique in which a refuse receiver and a weighing device are provided in front of the position where refuse drops from a hopper onto a drying fire grate and in which the weight of refuse on the refuse receiver is measured to thereby adjust the quantity of supplied refuse, is described in JP-B-2-27568.

Although refuse is introduced into the hopper of the incineration furnace after stirred in a refuse pit, the weight and size of refuse are not constant individually. Accordingly, when refuse is introduced into the hopper, refuse on the drying fire grate may be often pushed out suddenly onto the combustion fire grate under the influence of the dropping of the introduced refuse. In this case, because not only the quantity of supplied refuse becomes temporarily excessive but also insufficiently dried refuse is delivered onto the combustion fire grate, the state of combustion is worsened.

That is, the aforementioned prior art is effective in the case where refuse is introduced stably because the feed speed of the drying fire grate is adjusted to feed refuse having predetermined weight while the weight of refuse is measured. However, when refuse is pushed out excessively in a short time as described above, no measure counter to the pushing is provided. Accordingly, there was a problem that the quantity of produced steam varies widely because of the influence of the pushing.

Further, the properties of refuse are multifarious. For example, inflammable refuse may be supplied after supply of flammable refuse or the case reverse to the above-mentioned case may be made. In this case, the quantity of produced steam does not become constant only when the target quantity of incineration which is determined whenever refuse is introduced is achieved. To keep the quantity of produced steam constant, control is required in accordance with the properties of refuse which change every moment. To solve this problem, there is a method (hereinafter referred to as "produced steam quantity measuring method") in which: the quantity of produced steam is measured; and com-

2

bustion is controlled so that the quantity of combustion air is reduced when the quantity of produced steam is larger than a target quantity and that the quantity of combustion air is increased when the quantity of produced steam is smaller than the target quantity. There is further proposed a method (hereinafter referred to as "exhaust gas $O_2$ concentration measuring method") in which the concentration of $O_2$ in exhaust gas is measured to control the quantity of combustion air to thereby stabilize the state of combustion. For example, a method in which: the quantity of air supplied to the refuse incineration furnace, the concentration of $O_2$ in exhaust gas and the flow quantity of exhaust gas are measured; an excess air ratio is calculated on the basis of the measured values; the excess air ratio is compared with a standard excess air ratio; and the quantity of combustion air is controlled so that the two ratios coincide with each other, is described in JP-A-6-331123.

EP 059 178 describes a control method, wherein the quantity of produced steam as well as the concentration of $O_2$ in the exhaust gas are used to control the quantity of combustion air, according to the preamble of claim 1 of the current application.

In the produced steam quantity measuring method or in the exhaust gas $O_2$ concentration measuring method, however, combustion was not always stable, so that it was often difficult to keep the quantity of produced steam constant. When, for example, bad-quality refuse containing a large amount of water is supplied, not only the quantity of flammable refuse is so small that the quantity of produced steam decreases but also oxygen is not consumed so that the concentration of $O_2$ in exhaust gas increases.

In this occasion, in the produced steam quantity measuring method, the quantity of combustion air is increased to activate combustion. However, even in the case where the quantity of combustion air is increased, combustion air does not contribute to combustion before refuse is dried. Accordingly, combustion air cools the inside of the furnace. As a result, wasteful air is blown to thereby worsen the state of combustion undesirably. Further, in this occasion, in the exhaust gas $O_2$ concentration measuring method, the quantity of combustion air is reduced to obtain the standard excess air ratio. Accordingly, the drying of refuse is delayed, so that the state of combustion is still not improved. As described above, in the aforementioned prior art, the state of combustion cannot be normalized in accordance with the change of the properties of refuse. There was a problem that it was difficult to keep the quantity of produced steam constant.

DISCLOSURE OF THE INVENTION

An object of the present invention is to provide a combustion control method in a refuse incineration furnace comprising the steps of: measuring a quantity of steam produced in the refuse incineration furnace and a concentration of $O_2$ in exhaust gas; calculating a target quantity of combustion air required for making the quantity of produced steam coincident with a target quantity of produced steam; storing, as a temporarily set quantity of combustion air, the target quantity of combustion air calculated when the measured value of the concentration of $O_2$ in exhaust gas first reaches a predetermined upper limit value; controlling the quantity of combustion air to be coincident with the target quantity of combustion air when the measured value of the concentration of $O_2$ in exhaust gas is not larger than the upper limit value; and controlling the quantity of combustion air to be coincident with smaller one of the target quantity of combustion air and the temporarily set quantity of combustion air when the measured value of the concentration of $O_2$ in exhaust gas is larger than the upper limit value.

Generally, combustion air is blown in in accordance with a standard quantity decided at the time of the introduction of refuse. This standard quantity is larger than the quantity of air based on the theoretical quantity of $O_2$ required for performing complete combustion of refuse, that is, this standard quantity is about 1.5 times as large as the quantity of air based on the theoretical quantity of $O_2$. In this occasion, the measured value of the concentration of $O_2$ in exhaust gas is not larger than the upper limit value thereof.

Accordingly, when relatively flammable refuse is supplied, the quantity of consumed $O_2$ increases and the concentration of $O_2$ in exhaust gas decreases. In this case, however, combustion is performed actively, so that the state of combustion is good. In this condition, the quantity of produced steam approaches a target value if the quantity of combustion air is reduced to decrease the speed of combustion when the quantity of produced steam is larger than the target value and if the quantity of combustion air is increased to increase the speed of combustion when the quantity of produced steam is smaller than the target value. Accordingly, if the target quantity of combustion air is calculated by a PID method, or the like, and the quantity of combustion air is controlled in a short period on the basis of the result of the measurement of the quantity of produced steam to make the quantity of produced steam coincident with the target value, the quantity of produced steam can be always kept to be the target value.

The case where the measured value of the concentration of $O_2$ in exhaust gas is larger than the upper limit value is, however, different from the ordinary case. In this case, the quantity of refuse which reaches a firing point is small even though the quantity of combustion air may be appropriate. Accordingly, not only the quantity of consumed $O_2$ is so small that the concentration of $O_2$ in exhaust gas becomes larger than the upper limit value but also the state of combustion is so bad that the quantity of produced steam is smaller than the target value. In this case, if the quantity of combustion air is intended to be controlled on the basis of the result of the measurement of the quantity of produced steam to make the quantity of produced steam coincident with the target value, the calculated target quantity of combustion air increases more and more and the quantity of combustion air increases more and more. However, as described above, even if the quantity of combustion air increases, refuse is merely cooled to increase refuse which does not reach the firing point. Even if the quantity of combustion air contrariwise decreases, the drying of refuse is merely delayed.

The appropriate quantity of combustion air in this case is a temporarily set quantity of combustion air. The temporarily set quantity of combustion air is a target quantity of combustion air in the case where the measured value of the concentration of $O_2$ in exhaust gas reaches the upper limit value, that is, the temporarily set quantity of combustion air is a quantity of air which is sufficient for combustion and which indicates such a boundary that an excess of air over this quantity becomes wasteful air. When control is performed to make the quantity of combustion air coincident with the temporarily set quantity of combustion air, refuse bad in properties can be dried and recovered to a normal state rapidly without cooling of the refuse.

Accordingly, not only blowing combustion air wastefully to cool refuse more greatly is avoided but also reducing the quantity of combustion air to delay the drying of refuse is avoided, so that the quantity of produced steam approaches the target value rapidly. As described above, even in the case where the properties of refuse change abnormally, the refuse can be burned efficiently to stabilize the state of combustion to thereby produce a predetermined quantity of steam. (5) According to another aspect of the present invention, in the combustion control method in a refuse incineration furnace as described in the above paragraph (4), in the case where the measured value of the concentration of $O_2$ in exhaust gas is not larger than the upper limit value, control is made to reduce the temperature of combustion air when the low calorific power of refuse is high while control is made to raise the temperature of combustion air when the low calorific power of refuse is low; and in the case where the measured value of the concentration of $O_2$ in exhaust gas is larger than the upper limit value, control is made to raise the temperature of combustion air in accordance with the difference between the upper limit value and the measured value of the concentration of $O_2$ in exhaust gas.

Low calorific power is calorific power of refuse per unit weight which is calculated on the basis of the quantity of introduced refuse and the income and expenditure of heat quantities such as the quantity of heat collected by the boiler, the quantity of exhaust heat, the quantity of heat radiated from a body of the furnace, etc. Accordingly, the low calorific power is calculated whenever refuse is introduced into the hopper. The low calorific power thus obtained is calorific power of refuse introduced in the preceding time or mean calorific power of refuse introduced in the past up to the preceding time, so that the low calorific power is used as an aim to find whether the quantity of water contained in refuse incinerated on that day or for several hours up to now is large or not.

Ordinarily, that is, when the measured value of the concentration of $O_2$ in exhaust gas is not larger than the upper limit value, the temperature of combustion air is allowed to be low because the quantity of water is small if the low calorific power is high. Contrariwise, because the quantity of water is large if the low calorific power is low, the temperature of combustion air can be raised to intensify the drying of refuse to thereby stabilize the state of combustion.

However, when the measured value of the concentration of $O_2$ in exhaust gas is larger than the upper limit value, that is, when abnormal refuse is supplied into the furnace, the appropriate temperature of combustion air cannot be judged on the basis of the mean low calorific power. In this case, because refuse containing an abnormally large quantity of water is supplied into the furnace, not only the quantity of combustion air is controlled to coincide with the target quantity or temporarily set quantity of combustion air at that time but also the temperature of combustion air is controlled to be raised in accordance with the difference between the upper limit value of the concentration of $O_2$ and the measured value thereof. That is, not only the quantity of combustion air is increased within a wasteless range but also the temperature of combustion air is raised more greatly as the concentration of $O_2$ increases. (6) According to a further aspect of the present invention, in the combustion control method in a refuse incineration furnace as described in the above paragraph (4) or (5), an excess air ratio is obtained on the basis of the measured value of the concentration of $O_2$ in exhaust gas; and the quantity of combustion air is controlled by use of the excess air ratio instead of the measured value of the concentration of $O_2$ in exhaust gas.

In the operation of the combustion furnace, the excess air ratio is generally used as an index of the adjustment of the quantity of combustion air. Accordingly, it is practical that the excess air ratio is used for controlling the quantity of combustion air. In this case, the excess air ratio is obtained as the ratio of the concentration of $O_2$ in air to the concentration of consumed $O_2$. That is, the excess air ratio is expressed by the following expression (21):

$$\lambda = 0.21/\{0.21 - O_2\} \tag{21}$$

in which $O_2$ is the concentration of $O_2$ in exhaust gas.

The concentration of $O_2$ in exhaust gas and the excess air ratio have one-to-one correspondence with each other. Accordingly, when the upper limit value of the excess air ratio is determined so as to correspond to the upper limit value of the concentration of $O_2$ in exhaust gas, the quantity of combustion air can be controlled in the same manner as described above, by use of the excess air ratio instead of the concentration of $O_2$ in exhaust gas in the combustion air quantity control described in the paragraph (4) or (5).

BRIEF DESCRIPTION OF THE DRAWINGS

Fig. 1 is a conceptual view of a refuse incineration furnace and its control system, in which a combustion control method in a refuse incineration furnace is applied;

Fig. 2 is a block diagram showing the processing steps of drying fire grate speed control using the linear density of introduced refuse in the drying fire grate speed control means depicted in Fig. 1;

Fig. 3 is a graph showing the relation between the measurement time and the linear density of refuse in results of the drying fire grate speed control using the linear density of introduced refuse in Fig. 2;

Fig. 4 is a graph showing the change of the quantity of produced steam in results of the drying fire grate speed control using the linear density of introduced refuse in Fig. 2;

Fig: 5 is a graph showing the relation between the measurement time and the linear density of refuse in results obtained by a conventional refuse quantitative supply method;

Fig. 6 is a graph showing the change of the quantity of produced steam in results obtained by the conventional refuse quantitative supply method;

Fig. 7 is a block diagram showing the processing steps of drying fire grate speed control using the level change of introduced refuse, in which a combustion control method in a refuse incineration furnace according to another embodiment of the present invention is applied;

Fig. 8 is a graph showing the relation between the measurement time and the linear density of refuse in results of the drying fire grate speed control using the level change of introduced refuse in Fig. 7;

Fig. 9 is a graph showing the change of the quantity of produced steam in results of the drying fire grate speed control using the level change of introduced refuse in Fig. 7:

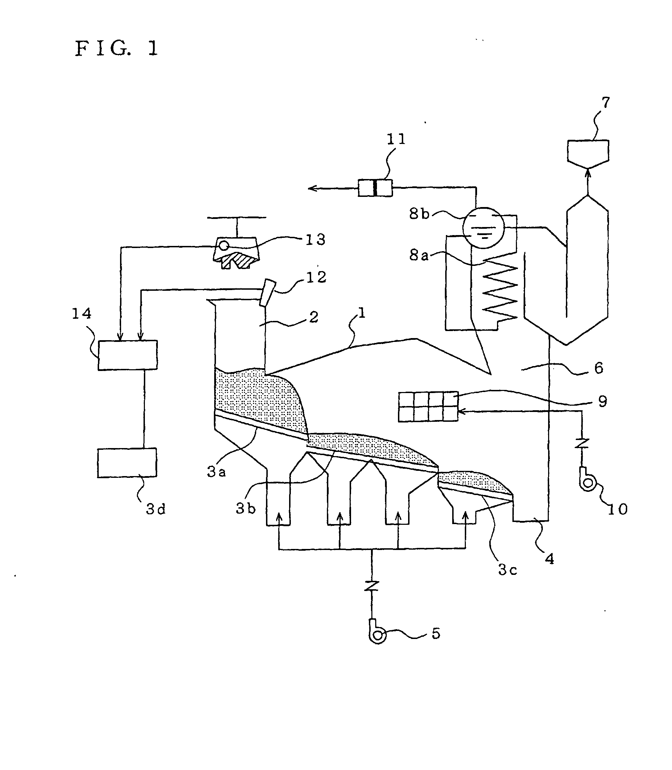

Fig. 1-9 do not comply with the present invention.

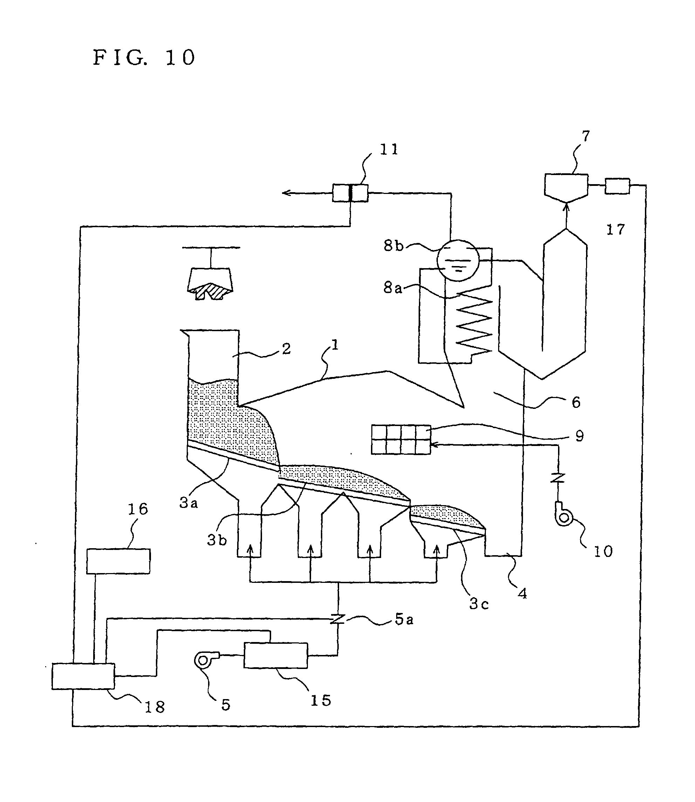

Fig. 10 is a conceptual view of a refuse incineration furnace and its control system, in which a combustion control method in a refuse incineration furnace according to the present invention is applied;

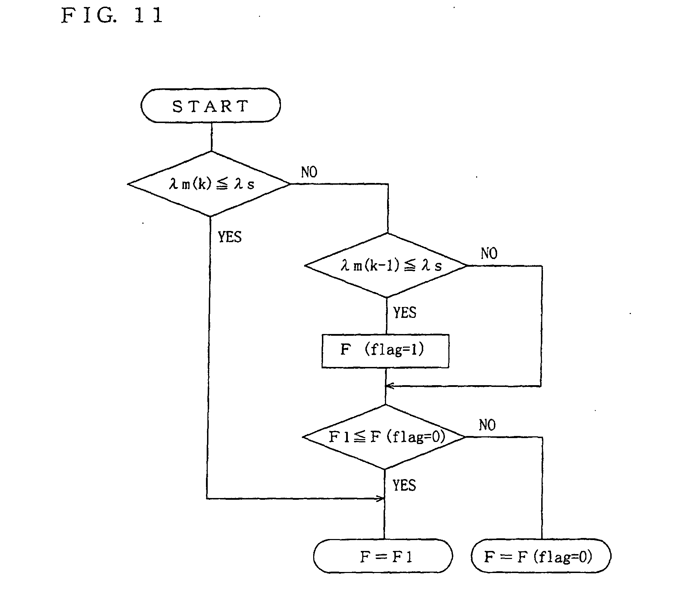

Fig. 11 is a flow chart showing the processing steps for determining the set value of the quantity of combustion air in the control system depicted in Fig. 10;

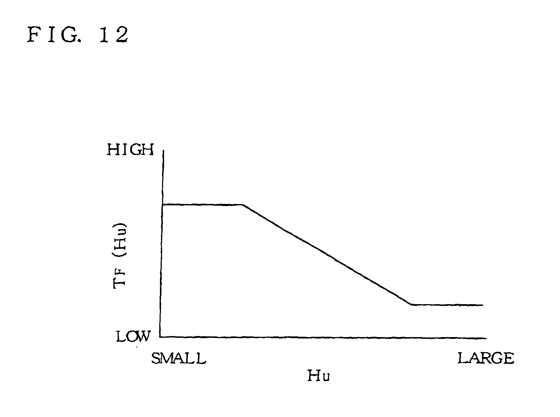

Fig. 12 is a graph showing the relation between the set value of the temperature of combustion air and low calorific power for explaining the embodiment shown in Fig. 10;

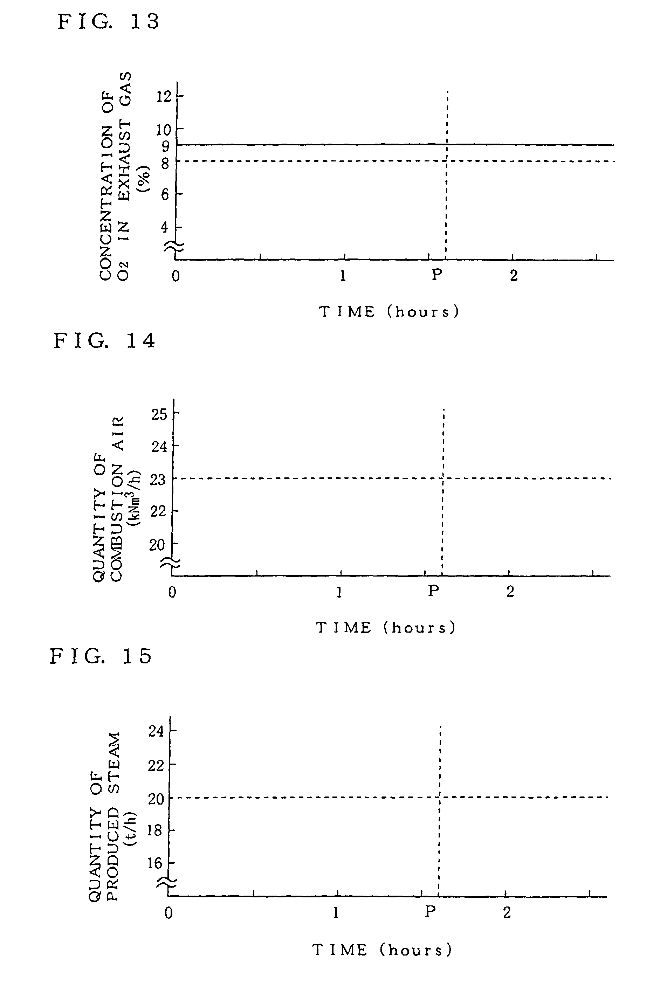

Fig. 13 is a graph showing the characteristic of the concentration of $O_2$ in exhaust gas in results in the case where control is made by the embodiment shown in Fig. 10;

Fig. 14 is a graph showing the characteristic of the quantity of combustion air in results in the case where control is made by the embodiment shown in Fig. 10;

Fig. 15 is a graph showing the characteristic of the quantity of produced steam in results in the case where control is made by the embodiment shown in Fig. 10;

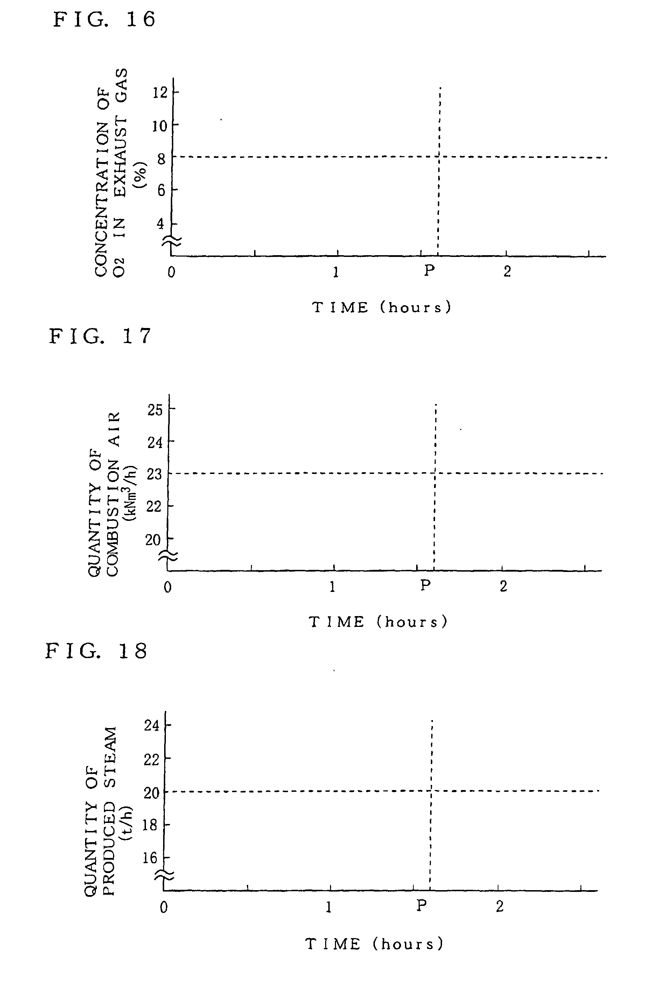

Fig. 16 is a graph showing the characteristic of the concentration of $O_2$ in exhaust gas in results in the case where control is made by a conventional produced steam quantity measuring method;

Fig. 17 is a graph showing the characteristic of the quantity of combustion air in results in the case where control is made by the conventional produced steam quantity measuring method;

Fig. 18 is a graph showing the characteristic of the quantity of produced steam in results in the case where control is made by the conventional produced steam quantity measuring method;

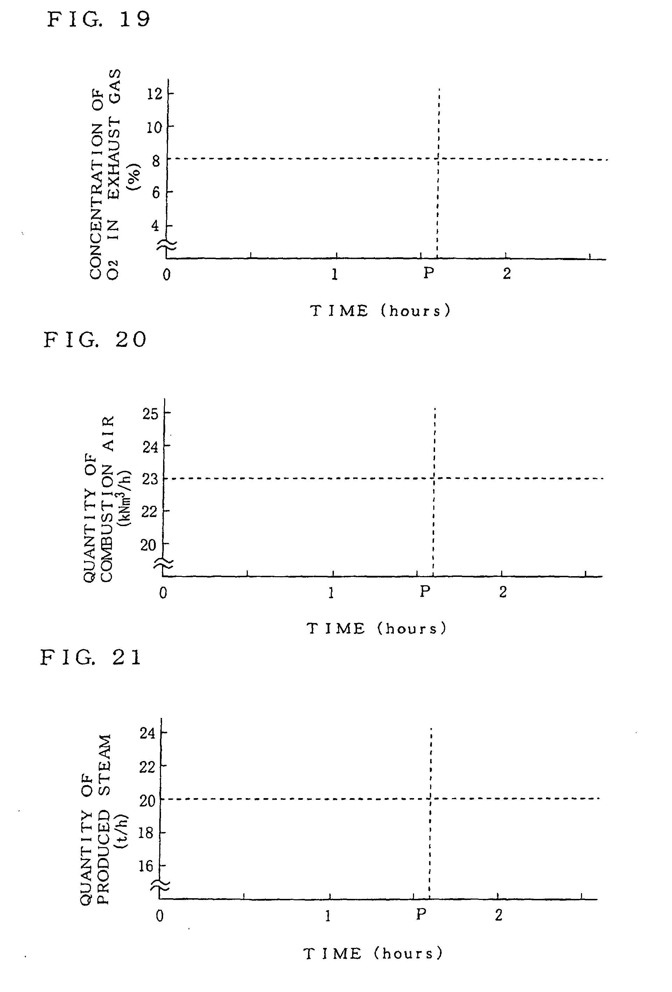

Fig. 19 is a graph showing the characteristic of the concentration of $O_2$ in exhaust gas in results in the case where control is made by a conventional method of measuring the concentration of $O_2$ in exhaust gas;

Fig. 20 is a graph showing the characteristic of the quantity of combustion air in results in the case where control is made by the conventional method of measuring the concentration of $O_2$ in exhaust gas; and

Fig. 21 is a graph showing the characteristic of the quantity of produced steam in results in the case where control is made by the conventional method of measuring the concentration of $O_2$ in exhaust gas.

Description of Fig. 1-6

Fig. 1 is a conceptual view of a refuse incineration furnace and a control system therefor, in which a combustion control method in a refuse incineration furnace according to an embodiment of the present invention is applied. In the drawing, the reference numeral 1 designates a furnace; 2, a hopper; 3a, a drying fire grate; 3b, a combustion fire grate; 3c, an after-combustion fire grate; and 4, an ash drop port. Combustion air supplied by a combustion air blower 5 is blowing up from below these fire grates. Refuse introduced from the hopper 2 is dried in the drying fire grate 3a, burned in the combustion fire grate 3b and completely burned in the after-combustion fire grate 3c by the combustion air to form ash. The ash drops down through the ash drop port 4 to the outside of the furnace.

On the other hand, exhaust gas produced by combustion is led to a chimney 7 through a furnace outlet 6 and discharged to the outside of the furnace. A steam generation boiler 8b having a heat exchanger 8a is disposed in the furnace outlet through which exhaust gas is discharged. Cooling air from a cooling fan 10 is blowing in through a cooling air blowing port 9 to prevent the temperature of the inside of the furnace from rising excessively. The reference numeral 11 designates a flow meter for measuring the quantity of produced steam.

The reference numeral 14 designates a drying fire grate speed control means which receives a signal of a refuse gravimeter 13 and a signal of a refuse level meter 12 as input signals and outputs a speed signal to a drying fire grate driver 3d. For example, a computer is used for the drying fire grate speed control means 14 so that not only the weight of refuse and the level change of refuse are obtained on the basis of the measurement signal or the mean values in the past are calculated but also the following arithmetic operation for the controlled quantity is carried out to thereby output a drying fire grate speed signal.

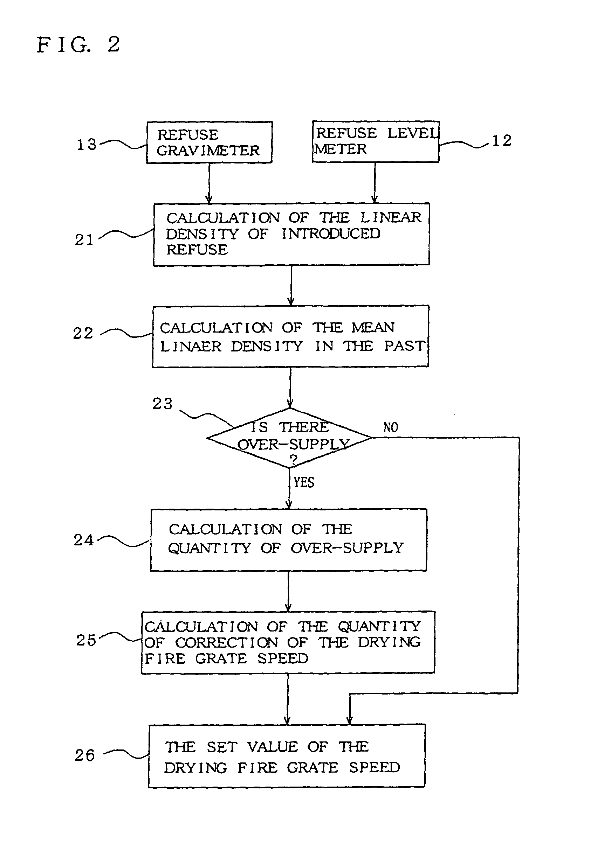

Referring to Fig. 2, an arithmetic operation for the controlled quantity will be described first in the case where the bulk density of introduced refuse and the mean bulk density of refuse in the past are compared with each other. The arithmetic operation will be described while taking as an example the case where the sectional area of the hopper is constant, that is, bulk density is replaced by linear density. In Fig. 2, the reference numeral 21 designates a block for calculating the linear density of introduced refuse. The linear density of refuse is calculated by the following expression (1) on the basis of the weight W of the refuse and the difference between the level $L_1$ of the refuse just before the introduction of the refuse and the level $L_2$ of the refuse just after the introduction of the refuse, that is, the level change of the refuse whenever the refuse is introduced.

$$\rho = W/(L_2 - L_1) \tag{1}$$

The reference numeral 22 designates a block for calculating the mean linear density of refuse in the past. In this block, linear density values of refuse obtained in n times of introduction of refuse in the past up to the preceding time are averaged by the following expression (2) to calculate the mean linear density $\rho_m$ of refuse.

$$\rho_m = (\rho_1 + \rho_2 + \cdots \rho_n)/n \tag{2}$$

The subscript given to $\rho$ shows the number of times of introduction in the past. When the subscript is 1, there is expressed the linear density of refuse in the preceding introduction. When the subscript is n, there is expressed the linear density of refuse in the introduction of n times before.

In a block 23, the linear density $\rho$ of refuse obtained in the present introduction of refuse is compared with the mean linear density $\rho_m$ in the past to thereby judge whether over-supply is made or not. When $(\rho - \rho_m)$ is larger than a set reference value parameter, a decision is made that over-supply is made and the situation goes to a next calculation block 24 to continue an arithmetic operation. When $(\rho - \rho_m)$ is smaller than the set reference value parameter, a decision is made that over-supply is not made and the situation goes to a block 26 to output a set value of drying fire grate speed determined on the basis of ordinary combustion control.

The block 24 is a block for calculating an over-supply quantity W'. The over-supply quantity W' is calculated by the following expression (3).

$$W' = W - (L_2 - L_1) \rho_n \tag{3}$$

In a block 25, a correction quantity, that is, a speed reduction rate $\underline{v}$ of the drying fire grate is calculated by the following expression (4) on the basis of the over-supply quantity W' and a drying fire grate speed correction parameter.

$$v = \beta(W'/W) \tag{4}$$

In the expression, β is the drying fire grate speed correction parameter. Further, the correction quantity is a quantity proportional to the over-supply ratio.

In the block 26, the set value Vs of the drying fire grate speed corrected on the basis of the correction quantity in the block 25 is calculated by the following expression (5).

$$Vs = Vs'(1 - v) \qquad (5)$$

In the expression, Vs' is drying fire grate speed determined on the basis of the target vaporization quantity set at the time of the introduction of refuse. The set value Vs of the drying fire grate speed thus obtained is outputted to the drying fire grate driver.

Although the aforementioned example shows the case where the drying fire grate speed is reduced in accordance with the over-supply quantity, the calculation of the drying fire grate speed correction quantity in the block 25 may be replaced by the calculation of drying fire grate stop time $t_1$ based on the following expression (6) to temporarily stop the drying fire grate.

$$t_1 = \gamma_1(W'/W_m) \qquad (6)$$

In the expression, $\gamma_1$ is a stop time parameter, and $W_m$ is the mean weight of refuse introduced in the past. The stop time $t_1$ is proportional to the over-supply ratio. In this case, the set value of the drying fire grate speed is once made to be zero and Vs' is set after the stop time $t_1$ is passed.

Although the judgment in the block 23 as to whether over-supply is made or not is made on the basis of whether the difference between the linear density $\rho$ of refuse and the mean linear density $\rho_m$ in the past is larger than the reference value parameter or not, the judgment may be made in accordance with the size of the ratio ($\rho/\rho_m$) thereof. In this case, the value of the reference value parameter varies. Further, the reference value parameter varies in accordance with the equipment, the refuse quality, etc., so that the reference value parameter is required to be determined taking the locality, season, etc. into account even in the case where the same type equipment is used.

By using the refuse incineration furnace shown in Fig. 1, the drying fire grate speed was corrected on the basis of the comparison between the linear density of introduced refuse and the mean linear density in the past five times of refuse introduction. The change of the vaporized quantity of boiler water was examined. The arithmetic operation by the drying fire grate speed control means 14 was carried out as follows.

The difference between the linear density of introduced refuse obtained on the basis of the measurement of the level just before and just after the introduction of the refuse and the mean linear density in the past was compared with the reference value parameter to thereby correct the drying fire grate speed. First, two values were decided as the reference value parameter $\alpha$ for judging the degree of over-supply. That is, the two values were $\alpha_1 = 0.15$ and $\alpha_2 = 0.25$. When the difference between the linear density of refuse in the present introduction and the mean linear density was larger than $\alpha_1$ and not larger than $\alpha_2$, a decision was made that the degree of over-supply was ordinary. When the difference was larger than $\alpha_2$, a decision was made that the degree of over-supply was extraordinary. Further, when the linear density difference was larger than $\alpha_1$ and smaller than $\alpha_2$, the set value of the drying fire grate speed was obtained by the aforementioned expression (4) to perform correction. When the difference was larger than $\alpha_2$, that is, in the case of extraordinary over-supply, the drying fire grate was stopped and the stop time thereof was calculated.

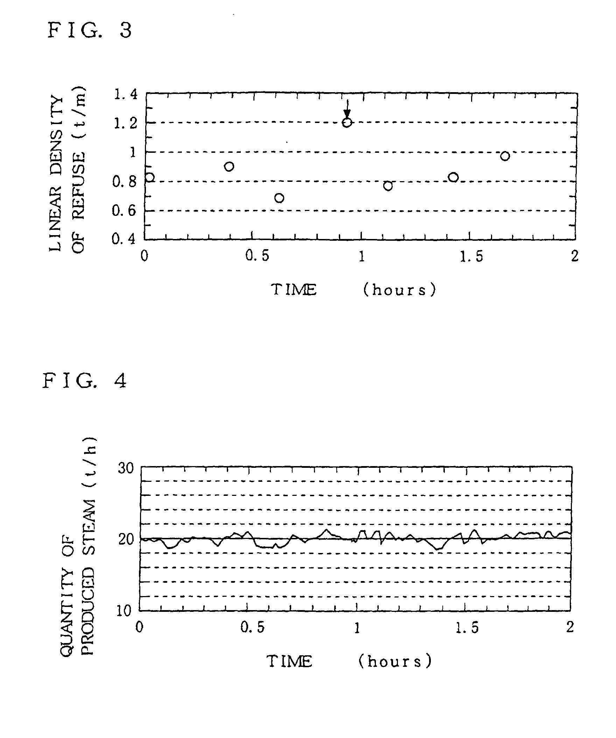

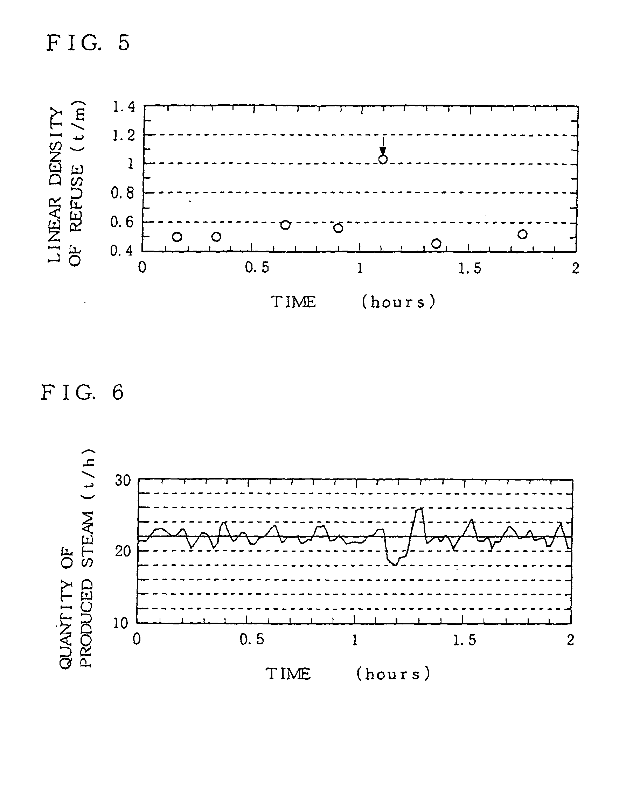

Referring to Figs. 3 and 4, the arithmetic operation will be described specifically. In Fig. 3, the symbol ○ designates the linear density of refuse obtained whenever the refuse is introduced. The linear density (shown by the arrow) of refuse introduced when about one hour was passed after the start of the measurement became large to be 1.2 t/m. The mean value obtained in the case of n = 5 was 0.85 t/m and the linear density difference was 0.35 t/m. Accordingly, because the linear density difference was larger than the reference value parameter 0.25 t/m, a decision was made that the degree of over-supply was extraordinary.

Accordingly, the stop time was calculated. The thought about the calculation of the stop time is as follows.

When the target incineration quantity corresponding to the required quantity of produced steam is R(t/h), the time t' required for supplying the over-supply quantity W' is expressed by the following expression (7).

$$t' = W'/R \qquad (7)$$

Accordingly, the drying fire grate may be stopped for the time t'. However, when the drying fire grate was stopped for the time actually, a rebound appeared so that the quantity of refuse on the combustion fire grate became short. Accordingly, the drying fire grate stop time $\underline{t}$ was obtained by the following expression (8) using a stop time parameter $\gamma$. $\gamma$ is a positive constant not larger than 1.

$$t = \gamma t'$$ (8)

Specifically, calculation was carried out as follows. Because the level change ($L_2 - L_1$) at the time of the introduction of refuse was 1.57 m, the over-supply quantity of refuse was estimated to be 0.55 t. Because the target incineration quantity R was 6 t/h, t' was 0.0917 hours, that is, 330 seconds. When 0.8 was used as the stop time parameter $\gamma$ to obtain the drying fire grate stop time $\underline{t}$, the stop time of 264 seconds was obtained.

The quantity of steam produced when the drying fire grate is controlled in the aforementioned manner is shown in Fig. 4. The time axis in Fig. 4 coincides with the time axis in Fig. 3, so that each time axis expresses the time which is passed after the start of the measurement. The linear density of refuse became high in the position indicated by the arrow in Fig. 3 as described above, but the vaporization quantity followed the target vaporization quantity 20 t/h within a change range of $\pm 2$ t/h regardless of the influence of the increase of the linear density as shown in Fig. 4. Accordingly, a stable operation was achieved.

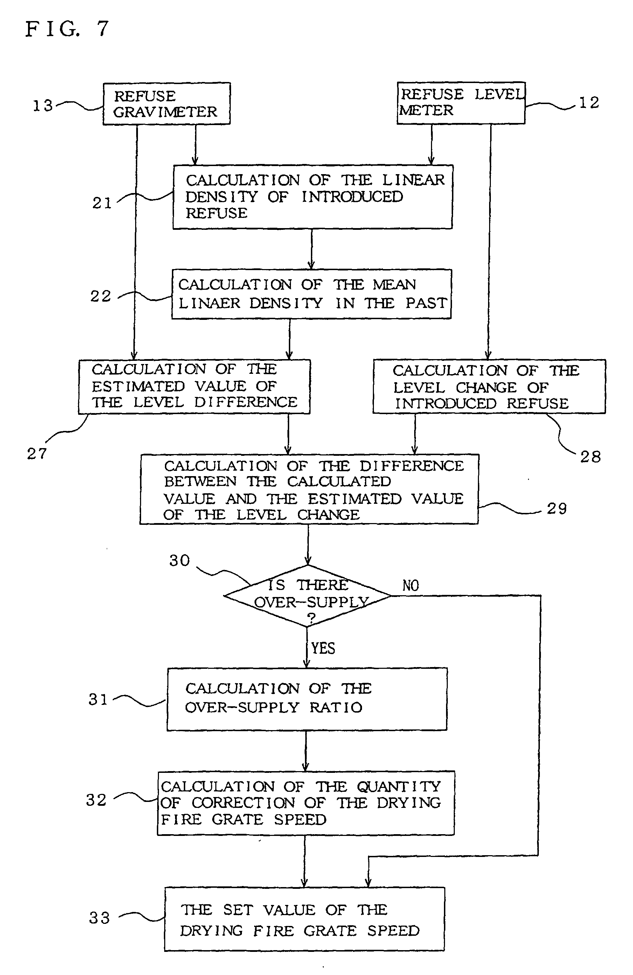

Results obtained in a conventional example for comparison are shown in Figs. 5 and 6. In the conventional combustion control method, the linear density of refuse became high in the position indicated by the arrow in Fig. 5, that is, an excessive quantity of refuse was supplied into the furnace. Accordingly, the temperature of the combustion zone was lowered on the basis of the influence of the supply of the excessive quantity of refuse, so that the vaporization quantity was temporarily reduced by 4 t/h with respect to the target vaporization quantity 22 t/h and then an excessive quantity of steam was reversely produced on the basis of the combustion of the excessive quantity of refuse, as shown in Fig. 6.

Description of Fig. 7-9

Referring to Fig. 7, an arithmetic operation for the controlled condition will be described below in the case where comparison is made on the basis of the difference between the ratio of the weight of introduced refuse to the mean linear density in the past and the level change. Fig. 7 is a block diagram showing the processing steps of the drying fire grate speed control using the level change of introduced refuse in the drying fire grate speed control means shown in Fig. 1. In Fig. 7, the calculation of the linear density of introduced refuse in a block 21 and the calculation of the mean linear density in the past in a block 22 are the same as in the previously-described case where the linear density of introduced refuse is compared with the mean value in the past.

In a block 27, the estimated value of the level difference is calculated. As this estimated value $L_s$, the ratio of the weight of introduced refuse to the mean value $\rho_m$ of linear density in $\underline{n}$ times in the past calculated in the block 22 is obtained by the following expression (9).

$$L_s = W/\rho_m$$ (9)

The level change $L_k$ of introduced refuse is calculated by the following expression (10) in a block 28.

$$L_k = L_2 - L_1$$ (10)

In a block 29, the difference $\Delta L$ between the estimated value $L_s$ of the level difference of introduced refuse calculated in the block 27 and the level change (hereinafter referred to as "measured value") $L_k$ calculated in the block 28 on the basis of measured levels is obtained by the following expression (11).

$$\Delta L = L_s - L_k$$ (11)

In the previously-described case where comparison is made on the basis of the difference ($\rho - \rho_m$) between the linear density of introduced refuse and the mean value of linear density in the past, both the weight of refuse and the level change are compared with the mean values thereof in the past. In the case of comparison using the difference $\Delta L$ between the estimated value and the measured value, however, only the level change is compared with the mean value thereof in the past. In the former case, deviations are included in a subject of comparison when the bulk density of refuse deviates from the mean value. In the latter case, comparison is made so that only the quantity of pushing-out is grasped more accurately because the deviations are cancelled.

In a block 30, the difference $\Delta L$ between the estimated value and the measured value of the level difference is compared with a reference value parameter $\Delta L_p$. When $\Delta L$ is larger than $\Delta L_p$, a decision is made that refuse is pushed out, and the situation goes to a block 31. When $\Delta L$ is contrariwise not larger than $\Delta L_p$, a decision is made that refuse is normally introduced without pushing, and the situation goes to a block 33 to output the set value of the drying fire grate speed determined on the basis of ordinary combustion control.

In the block 31, the refuse over-supply ratio is calculated on the basis of $\Delta L$ obtained in the expression (11). The over-supply ratio V' is calculated by the following expression (12).

$$V' = S\Delta L \tag{12}$$

Then, in a block 32, the drying fire grate speed correction quantity $\varepsilon V$ proportional to the over-supply ratio V' is obtained by use of a drying fire grate speed correction parameter $\varepsilon$. Further, in the block 33, the set value $V_s$ of the drying fire grate is calculated by the expression (13).

$$V_s = V_s'(1 - \varepsilon V') \tag{13}$$

The drying fire grate speed $V_s$ thus obtained is outputted from the drying fire grate speed control means to the drying fire grate speed driver.

Although the aforementioned example shows the case where the drying fire grate speed is reduced in accordance with the quantity of over-supply, the calculation of the drying fire grate speed correction quantity in the block 32 may be replaced by the calculation of the drying fire grate stop time $t_2$ by use of the expression (14) so that the drying fire grate can be temporarily stopped.

$$t_2 = \gamma_2'(\Delta L/L_s) \tag{14}$$

In this expression, $\gamma_2$ is a stop time parameter. The stop time $t_2$ is proportional to the over-supply ratio in the same manner as in the aforementioned case where the linear density of the introduced refuse is compared with the mean value in the past. In this case, the set value of the drying fire grate speed is set to zero once and to $V_s'$ after the passage of the stop time $t_2$ in the same manner as in the above description.

Incidentally, also when the estimated value of the level difference is compared with the measured value thereof, not only the difference $\Delta L$ between the two values can be used for the comparison but also the ratio $L_s/L_k$ between the two values can be used to be compared with a reference value parameter as described above.

By using the refuse incineration furnace shown in Fig. 1, the linear density of introduced refuse was compared with the mean value of linear density in five times of introduction in the past to thereby correct the drying fire grate speed. The change of the quantity of vaporized boiler water was examined. The arithmetic operation in the drying fire grate speed control means 14 was carried out as follows.

The difference $\Delta L$ between the estimated value $L_s$ of the level difference and the measured value $L_k$ of the level change at the time of the introduction of refuse was compared with the reference value parameter $\Delta L_p$ to thereby control the drying fire grate speed.

First, two values were decided as the reference value parameter for judging the over-supply in the same manner as in an example in the aforementioned embodiment 1. The two values were $\Delta L_{p1} = 0.5$ m and $\Delta L_{p2} = 1.5$ m. When $\Delta L$ was larger than $\Delta L_{p1}$ and not larger than $\Delta L_{p2}$, a decision was made that the degree of over-supply was ordinary. When $\Delta L$ was larger than $\Delta L_{p2}$, a decision was made that the degree of over-supply was extraordinary. In the case where the degree of over-supply was ordinary, the set value of the drying fire grate speed was obtained by the expression (13) to perform correction. In the case where the degree of over-supply was extraordinary, the drying fire grate was stopped and the stop time thereof was calculated by the expression (14).

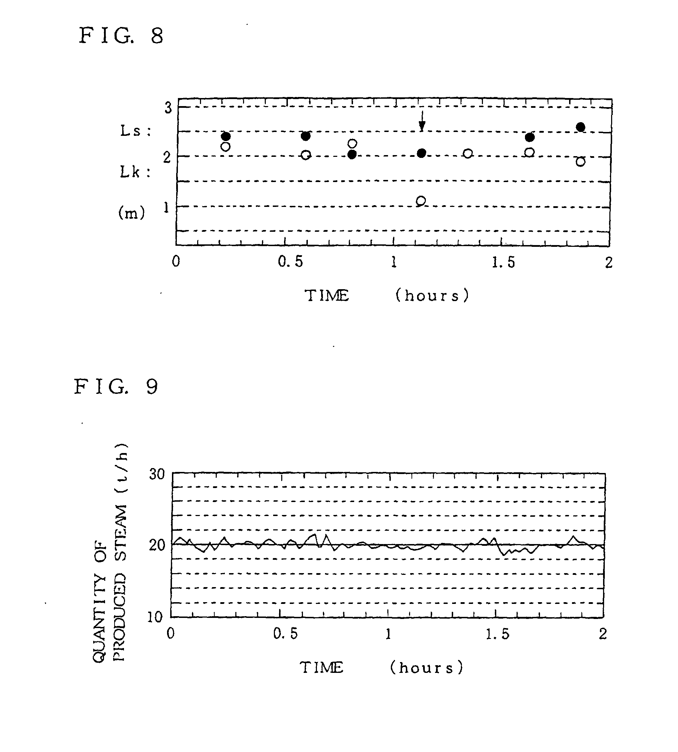

A specific example will be described below with reference to Figs. 8 and 9. In Fig. 8, the symbol ● shows the estimated value $L_s$ of the level difference, and the symbol ○ shows the measured value thereof. At the time of point (represented by the arrow in the drawing) when an hour was passed after the start of the measurement, the estimated value $L_s$ was 2.2 m and the measured value $L_k$ was 1.2 m. The difference $\Delta L$ between the two values was 1 m. Because $\Delta L$ was larger than $\Delta L_{p1}$ and smaller than $\Delta L_{p2}$, a decision was made that the degree of over-supply was ordinary. Accordingly, the quantity of reduction of the drying fire grate speed was calculated.

The over-supply ratio V' calculated by the expression (12) was 0.45. The drying fire grate speed correction parameter ε used was 0.8. A result that the set value of the drying fire grate speed was 0.64 times as much as the speed $V_s$' determined at the time of the introduction of refuse was obtained from the expression (13).

The quantity of steam produced when the drying fire grate is controlled in the aforementioned manner is shown in Fig. 9. The time axis in Fig. 9 coincides with the time axis in Fig. 8. Each time axis shows the time passed after the start of the measurement. As described above, at the point expressed by the arrow in Fig. 8, the measured value $L_k$ of the level change was so small that the difference between the estimated value $L_s$ and the measured value $L_k$ was large. That is, the pushing of refuse was detected. However, as shown in Fig. 9, the quantity of produced steam followed the target quantity 20 t/h of vaporization within a sufficiently narrower change range than ±2 t/h without any influence of the pushing of refuse, so that a stable operation was achieved.

BEST MODE FOR CARRYING OUT THE INVENTION

Fig. 10 is a conceptual view of a refuse incineration furnace and its control system, in which a combustion control method in a refuse incineration furnace according to an embodiment of the present invention is applied. In Fig. 10, the reference numeral 1 designates an incineration furnace which has a hopper 2, a drying fire grate 3a, a combustion fire grate 3b, an after-combustion fire grate 3c, and an ash drop port 4. Combustion air from a combustion air blower 5 is delivered to a heater 15 and blown up through a combustion air dumper 5a from below the respective fire grates. Refuse is mainly dried in the drying fire grate 3a by combustion air blown up from below the drying fire grate 3a. The refuse is burned in the combustion fire grate 3b. The refuse is burned out to ashes in the after-combustion fire grate 3c.

On the other hand, exhaust gas produced by combustion is led through a furnace exit 6 to a chimney 7 and discharged out of the furnace. When exhaust gas is discharged, the concentration of $O_2$ is measured by an $O_2$ concentration meter 17. Incidentally, cooling air fed from a cooling air fan 10 is blown in through a cooling air blowing port 9 to prevent the temperature of the inside of the furnace from raising excessively.

A boiler 8b having a heat exchanger 8a is disposed in the furnace exit 6 through which exhaust gas is discharged. The quantity of produced steam is measured by a flow meter 11.

The reference numeral 18 designates a combustion control means which deeply relates to the present invention. The combustion control means 18 receives signals from the flow meter 11 and the $O_2$ concentration meter 17 as input signals, calculates a set value of combustion air quantity and outputs a signal to the combustion air dumper 5a. Further, the combustion control means 18 receives a signal from a low calorific power arithmetic unit 16, calculates the temperature of combustion air and outputs a temperature signal to the heater 15. For example, a computer is used as the combustion control means 18.

The calculation of control values by the combustion control means 18 is performed in a predetermined period, and the procedure thereof is as follows.

A method of controlling the quantity of combustion air by use of the measured value of the concentration of $O_2$ in exhaust gas will be described first. As described above, the concentration of $O_2$ in exhaust gas and the excess air ratio have the relation expressed by the expression (21) so that they can be replaced by each other. Accordingly, the method will be described as an example using the excess air ratio. The excess air ratio $\lambda_{(k)}$ is calculated on the basis of the measured value of the concentration of $O_2$ in exhaust gas by the following expression (22):

$$\lambda_{(k)} = 0.21/\{0.21 - [O_2]_{(k)}\} \tag{22}$$

in which the subscript (k) indicates a currently measured value.

Further, values calculated in several times in the past up to the present time are smoothed by the following expression (23) to calculate the smoothed value $\lambda_{m(k)}$ of the excess air ratio.

$$\lambda_{m(k)} = \{ \lambda_{(k)} + \lambda_{(k-1)} + \cdots + \lambda_{(k-n+1)}\}/n \tag{23}$$

On the other hand, the measured value V of the quantity of produced steam and the target quantity $V_0$ of produced steam are given to a PID controller and compared with each other to thereby calculate the target quantity $F_1$ of combustion air based on the quantity of produced steam in accordance with the expression (24).

$$F_1 = (100/PB)[1 + \{1/(T_i \ S)\} + T_d \ S](V_0 - V) \tag{24}$$

In this expression, PB, $T_i$ and $T_d$ express the proportional gain, the integral gain and the differential gain respectively as tuning parameters, and S expresses the Laplace operator. $F_1$ is the quantity of combustion air in which the target quantity $V_0$ of produced steam ought to be obtained when the state of refuse is normal.

Then, judging from $\lambda_{m(k)}$ obtained by the aforementioned expression (23), the set value F of the quantity of combustion air is determined finally. The processing steps for determining the set value F of the quantity of combustion air are shown in Fig. 11.

First, the smoothed value $\lambda_{m(k)}$ of the excess air ratio is compared with the upper limit value $\lambda_s$ of the excess air ratio which is determined in advance. The upper limit value $\lambda_s$ of the excess air ratio is suitably determined within a range of from about 1.5 to about 2. When $\lambda_{m(k)}$ is not larger than $\lambda_s$, the set value F of the quantity of combustion air is determined to be $F_1$.

When $\lambda_{m(k)}$ is larger than $\lambda_s$, $F_1$ is compared with the temporarily set quantity F (flag = 0) of combustion air which is temporarily stored. When $F_1$ is smaller than F (flag = 0), the set value F of the quantity of combustion air is determined to be $F_1$. When $F_1$ is larger than F (flag = 0), the set value F of the quantity of combustion air is determined to be F (flag = 0).

The temporarily set quantity F (flag = 0) of combustion air is a target quantity of combustion air in the case where the smoothed value $\lambda_m$ of the excess air ratio first reaches the upper limit value.

Incidentally, in this stage, whether the smoothed value $\lambda_{m(k-1)}$ of the excess air ratio in the preceding time is not larger than $\lambda_s$ is examined. When $\lambda_{m(k-1)}$ is not larger than $\lambda_s$, the target quantity of combustion air in the present time is temporarily stored as the temporarily set quantity F (flag = 1) of combustion air. By this arithmetic operation, the temporarily set quantity of combustion air is not changed when the smoothed value of the excess air ratio is continuously larger than the upper limit value of the excess air ratio, but the temporarily set quantity of combustion air is updated when the smoothed value of the excess air ratio is once reduced to be not larger than the upper limit value of the excess air ratio and then exceeds the upper limit value of the excess air ratio again. Further, in the next arithmetic operation, F (flag 1) substituted for F (flag = 0) is used. Accordingly, the temporarily set quantity of combustion air is determined in accordance with the degree of abnormality in the properties of refuse in this occasion.

The case where the quantity of combustion air and the temperature of combustion air are controlled simultaneously will be described below. When the smoothed value $\lambda_{m(k)}$ of the excess air ratio is not larger than the upper limit value $\lambda_s$, the set value $T_{FSET}$ of the temperature of combustion air based on the expression (25) is fed from the combustion control means 16 to the heater 12 by which the temperature of combustion air is controlled so as to take the set value $T_{FSET}$. Also when the measured value of the concentration of $O_2$ in exhaust gas is not larger than the upper limit value, the same control is made.

$$T_{FSET} = T_F(Hu) \tag{25}$$

The set value $T_{FSET}$ of the temperature of combustion air is a function $T_F(Hu)$ of low calorific power Hu, for example, a function shown in Fig. 12. When low calorific power (Hu) is low, the temperature $T_F$ of combustion air is set to be high. When low calorific power (Hu) is high, the temperature $T_F$ of combustion air is set to be low.

When the smoothed value $\lambda_{m(k)}$ of the excess air ratio is larger than the upper limit value $\lambda_s$, the set value $T_{FSET}$ of the temperature of combustion air based on the expression (26) is fed from the combustion control means 16 to the heater 12 by which the temperature of combustion air is controlled so as to take the set value $T_{FEST}$. When the measured value $[O_2]_{(k)}$ of the concentration of $O_2$ in exhaust gas is larger than the upper limit value $[O_2]_s$, the set value $T_{FSET}$ of the temperature of combustion air is obtained on the basis of the expression (27).

$$T_{FSET} = T_F(Hu) + K_{TF1}\{\lambda_{m(k)} - \lambda_s\} \tag{26}$$

$$T_{FSET} = T_F(Hu) + K_{TF2}\{[O_2]_{(k)} - [O_2]_s\} \tag{27}$$

In the expressions, $K_{TF1}$ and $K_{TF2}$ are proportional gain control parameters. Further, the expression (27) is an expression in which the smoothed value $\lambda_{m(k)}$ of the excess air ratio and the upper limit value $\lambda_s$ thereof in the expression (26) are replaced by the measured value $[O_2]_{(k)}$ of the concentration of $O_2$ in exhaust gas and the upper limit value $[O_2]_s$ thereof respectively.

The incineration of refuse was performed by using the system shown in Fig. 10, and the concentration of $O_2$ in exhaust gas, the quantity of combustion air and the quantity of produced steam were examined. The target quantity of produced steam was 20 t/h and the upper limit of the concentration of $O_2$ in exhaust gas was 9 %. The measurement was made continuously. Measured values were picked up at intervals of 30 seconds and the calculation of the set value of the quantity of combustion air was performed in accordance with the processing steps shown in Fig. 11 to thereby control the quantity of combustion air.

The examination was performed also for the produced steam quantity measuring method and the exhaust gas $O_2$ concentration measuring method. Results thereof were compared.

Figs. 13 to 15 show results of execution of this embodiment. Figs. 16 to 18 show results in the produced steam quantity measuring method. Figs. 19 to 21 show results in the $O_2$ concentration measuring method. In each of Figs. 13,16 and 19, the change of the concentration of $O_2$ in exhaust gas is shown. In each of Figs. 14, 17 and 20, the change of the quantity of combustion air is shown. In each of Figs. 15, 18 and 21, the change of the quantity of produced steam is shown.

In this embodiment, the quantity of combustion air was controlled to coincide with the temporarily set quantity of combustion air at the point P of time when not only the concentration of $O_2$ in exhaust gas increased temporarily but also the quantity of produced steam decreased. As a result, the decreased quantity of produced steam was recovered soon.

On the other hand, in the produced steam quantity measuring method, the quantity of combustion air was increased at the point P of time, so that refuse was cooled. As a result, the quantity of produced steam was reduced continuously, so that the recovery of the quantity of produced steam was delayed extremely. Further, in the $O_2$ concentration measuring method, the quantity of combustion air was reduced at the point P of time, so that the drying of refuse was delayed. As a result, the reduction of the quantity of produced steam was not continued so much compared with the produced steam quantity measuring method, but the same long time as in the produced steam quantity measuring method was required for recovery.

**Claims**

1.  A combustion control method in a refuse incineration furnace (1), comprising the steps of: measuring a quantity of steam produced in the refuse incineration furnace and a concentration of $O_2$ in exhaust gas; calculating a target quantity of combustion air required for making the quantity of produced steam coincident with a target quantity of produced steam; **characterized by** storing, as a temporarily set the quantity of combustion air, the target quantity of combustion air calculated when the measured value of the concentration of $O_2$ in exhaust gas first reaches a predetermined upper limit value; controlling the quantity of combustion air to be coincident with the target quantity of combustion air when the measured value of the concentration of $O_2$ in exhaust gas is not larger than the upper limit value; and controlling the quantity of combustion air to be coincident with smaller one of the target quantity of combustion air and the temporarily set quantity of combustion air when the measured value of the concentration of $O_2$ in exhaust gas is larger than the upper limit value.

2.  A combustion control method in a refuse incineration furnace according to Claim 1 wherein: in the case where the measured value of the concentration of $O_2$ in exhaust gas is not larger than the upper limit value, control is made to reduce the temperature of combustion air when the low calorific power of refuse is high while control is made to raise the temperature of combustion air when the low calorific power of refuse is low: and in the case where the measured value of the concentration of $O_2$ in exhaust gas is larger than the upper limit value, control is made to raise the temperature of combustion air in accordance with the difference between the upper limit value and the measured value of the concentration of $O_2$ in exhaust gas.

3.  A combustion control method in a refuse incineration furnace according to Claim 1 or Claim 2 where: an excess air ratio is obtained on the basis of the measured value of the concentration of $O_2$ in exhaust gas; and the quantity of combustion air is controlled by use of the excess air ratio instead of the measured value of the concentration of $O_2$ in exhaust gas.

**Patentansprüche**

1.  Verbrennungsregelverfahren für einen Abfallverbrennungsofen (1), welches folgende Schritte umfasst: Messen der im Abfallverbrennungsofen erzeugten Dampfmenge und der $O_2$-Konzentration im Abgas, Berechnen der Sollmenge an Verbrennungsluft, die für die Herstellung der erzeugten Dampfmenge erforderlich ist, die mit der Sollmenge des erzeugten Dampfes zusammenfällt, **gekennzeichnet durch**: als vorübergehend eingestellte Verbrennungsluftmenge Speichern der berechneten Sollmenge an Verbrennungsluft, wenn der gemessene Wert der $O_2$-Konzentration im Abgas zuerst einen vorbestimmten oberen Grenzwert erreicht; Steuern der Menge an Verbrennungsluft derart, dass sie mit der Sollmenge an Verbrennungsluft zusammenfällt, wenn der gemessene Wert der $O_2$-Konzentration im Abgas nicht größer ist als der obere Grenzwert; und Steuern der Menge an Verbrennungsluft derart, dass sie mit dem kleineren Wert von Sollmenge an Verbrennungsluft und vorübergehend eingestellter Verbrennungsluftmenge zusammenfällt, wenn der gemessene Wert der $O_2$-Konzentration im Abgas größer ist als der obere Grenzwert.

2. Verbrennungsregelverfahren in einem Abfallverbrennungsofen nach Anspruch 1, bei welchem: falls der gemessene Wert der $O_2$-Konzentration im Abgas nicht größer ist als der obere Grenzwert eine Steuerung durchgeführt wird, um die Temperatur der Verbrennungsluft abzusenken, wenn die untere Heizkraft des Abfalls hoch ist, während eine Steuerung durchgeführt wird, um die Temperatur der Verbrennungsluft anzuheben, wenn die untere Heizkraft des Abfalls niedrig ist, und falls der gemessene Wert der $O_2$-Konzentration im Abgas höher liegt als der obere Grenzwert, eine Steuerung durchgeführt wird, um die Temperatur der Verbrennungsluft entsprechend der Differenz zwischen dem oberen Grenzwert und dem gemessenen Wert der $O_2$-Konzentration im Abgas anzuheben.

3. Ein Verbrennungsregelverfahren in einem Abfallverbrennungsofen nach Anspruch 1 oder 2, bei welchem ein Überschuss-Luftverhältnis aufgrund des gemessenen Wertes der $O_2$-Konzentration im Abgas erhalten wird; und die Menge an Verbrennungsluft durch Verwendung des Überschuss-Luftverhältnisses statt des gemessenen Werts der $O_2$-Konzentration im Abgas gesteuert wird.

**Revendications**

1. Procédé de régulation de combustion dans un four d'incinération de déchets (1), comprenant les étapes de mesure d'une quantité de vapeur d'eau produite dans le four d'incinération de déchets et d'une concentration de $O_2$ dans le gaz d'échappement; et de calcul d'une quantité cible d'air de combustion nécessaire pour faire en sorte que la quantité de vapeur d'eau produite coïncide avec une quantité cible de vapeur d'eau produite; **caractérisé par** le stockage, comme valeur réglée temporairement, de la quantité d'air de combustion, de la quantité cible d'air de combustion calculée lorsque la valeur mesurée de la concentration de $O_2$ dans le gaz d'échappement atteint pour la première fois une valeur limite supérieure prédéterminée; le réglage de la quantité d'air de combustion pour qu'elle coïncide avec la quantité cible d'air de combustion lorsque la valeur mesurée de la concentration de $O_2$ dans le gaz d'échappement n'est pas supérieure à la valeur limite supérieure; et le réglage de la quantité d'air de combustion pour qu'elle coïncide avec une valeur moindre de la quantité cible d'air de combustion et de la quantité réglée temporairement d'air de combustion lorsque la valeur mesurée de la concentration de $O_2$ dans le gaz d'échappement est supérieure à la valeur limite supérieure.

2. Procédé de régulation de combustion dans un four d'incinération de déchets selon la revendication 1, dans lequel, dans le cas où la valeur mesurée de la concentration de $O_2$ dans le gaz d'échappement n'est pas supérieure à la valeur limite supérieure, on effectue un réglage pour réduire la température de l'air de combustion lorsque la puissance calorifique basse des déchets est élevée, tandis qu'on effectue un réglage pour élever la température de l'air de combustion lorsque la puissance calorifique basse des déchets est basse; et, dans le cas où la valeur mesurée de la concentration de $O_2$ dans le gaz d'échappement est supérieure à la valeur limite supérieure, on effectue un réglage pour élever la température de l'air de combustion en fonction de la différence entre la valeur limite supérieure et la valeur mesurée de la concentration de $O_2$ dans le gaz d'échappement.

3. Procédé de régulation de combustion dans un four d'incinération de déchets selon la revendication 1 ou 2, dans lequel on obtient un rapport d'air en excès sur la base de la valeur mesurée de la concentration de $O_2$ dans le gaz d'échappement; et la quantité d'air de combustion est réglée par l'utilisation du rapport d'air en excès au lieu de la valeur mesurée de la concentration de $O_2$ dans le gaz d'échappement.

FIG. 1

F I G. 2

```
   ┌──────────────┐          ┌──────────────┐
13─│ REFUSE       │          │ REFUSE LEVEL │─12
   │ GRAVIMETER   │          │ METER        │
   └──────┬───────┘          └──────┬───────┘
          │                         │
          ▼                         ▼
   ┌──────────────────────────────────────┐
   │ CALCULATION OF THE LINEAR             │
21─│ DENSITY OF INTRODUCED                 │
   │ REFUSE                                │
   └───────────────┬──────────────────────┘
                   │
                   ▼
   ┌──────────────────────────────────────┐
22─│ CALCULATION OF THE MEAN              │
   │ LINAER DENSITY IN THE PAST            │
   └───────────────┬──────────────────────┘
                   │
                   ▼
          23─    ◇ IS THERE ◇   NO
                 ◇OVER-SUPPLY◇──────────────┐
                 ◇    ?     ◇                │
                   │                         │
                   │ YES                     │
                   ▼                         │
   ┌──────────────────────────────────────┐ │
24─│ CALCULATION OF THE                   │ │
   │ QUANTITY OF OVER-SUPPLY               │ │
   └───────────────┬──────────────────────┘ │
                   │                         │
                   ▼                         │
   ┌──────────────────────────────────────┐ │
   │CALCULATION OF THE QUANTITY            │ │
25─│OF CORRECTION OF THE DRYING            │ │
   │FIRE GRATE SPEED                       │ │
   └───────────────┬──────────────────────┘ │
                   │         ┌───────────────┘
                   ▼         ▼
   ┌──────────────────────────────────────┐
26─│ THE SET VALUE OF THE                 │
   │ DRYING FIRE GRATE SPEED               │
   └──────────────────────────────────────┘
```

EP 1 267 122 B1

F I G. 3

F I G. 4

16

F I G. 5

F I G. 6

F I G. 7

```
  13 ──┤ REFUSE              REFUSE LEVEL ├── 12
        │ GRAVIMETER          METER │
```

21 ── CALCULATION OF THE LINEAR
DENSITY OF INTRODUCED
REFUSE

22 ── CALCULATION OF THE MEAN
LINAER DENSITY IN THE PAST

27 ── CALCULATION OF THE
ESTIMATED VALUE OF
THE LEVEL DIFFERENCE

CALCULATION OF THE
LEVEL CHANGE OF
INTRODUCED REFUSE ── 28

CALCULATION OF THE DIFFERENCE
BETWEEN THE CALCULATED
VALUE AND THE ESTIMATED VALUE
OF THE LEVEL CHANGE ── 29

30 ── IS THERE
OVER-SUPPLY
? ──── NO

YES

31 ── CALCULATION OF THE
OVER-SUPPLY RATIO

32 ── CALCULATION OF THE QUANTITY
OF CORRECTION OF THE DRYING
FIRE GRATE SPEED

33 ── THE SET VALUE OF THE
DRYING FIRE GRATE SPEED

F I G. 8

F I G. 9

FIG. 10

FIG. 11

```
              ┌─────────────────┐
              │     START       │
              └─────────────────┘
                       │
                       ▼
                  ╱ λm(k)≦λs ╲─────── NO
                  ╲          ╱         │
                       │                │
                      YES               ▼
                       │          ╱ λm(k-1)≦λs ╲──── NO
                       │          ╲            ╱       │
                       │               │                │
                       │              YES               │
                       │               │                │
                       │       ┌──────────────┐         │
                       │       │  F (flag=1)  │         │
                       │       └──────────────┘         │
                       │               │◄───────────────┘
                       │               ▼
                       │        ╱ F1≦F(flag=0) ╲──── NO
                       │        ╲              ╱       │
                       │             │                  │
                       └──────────► YES                 │
                                     │                  │
                           ┌─────────────┐      ┌──────────────┐
                           │   F = F1    │      │ F = F(flag=0)│
                           └─────────────┘      └──────────────┘
```

FIG. 12

FIG. 13

FIG. 14

FIG. 15

F I G. 16

F I G. 17

F I G. 18

FIG. 19

FIG. 20

FIG. 21